(19) **Europäisches Patentamt**

**European Patent Office**

**Office européen des brevets**

(11) **EP 1 185 004 A1**

(12) **DEMANDE DE BREVET EUROPEEN**

(43) Date de publication:
06.03.2002 Bulletin 2002/10

(51) Int Cl.⁷: **H04B 7/08**

(21) Numéro de dépôt: **01402234.7**

(22) Date de dépôt: **27.08.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **29.08.2000 FR 0011160**

(71) Demandeur: **Mitsubishi Electric Information Technology Centre Europe B.V.**
**1101 AG Amsterdam Zuidoost (NL)**

(72) Inventeur: **Brunel, Loic, Mitsubishi Electricité**
**35700 Rennes (FR)**

(74) Mandataire: **Maillet, Alain**
**Cabinet le Guen & Maillet, 5, Place Newquay, B.P. 70250**
**35802 Dinard Cedex (FR)**

(54) **Méthode d'estimation conjointe de canal et de direction d'arrivée**

(57) Méthode d'estimation de canal et de direction d'arrivée d'un signal émis par un émetteur et reçu par un réseau d'antennes après s'être propagé selon au moins un trajet, comprenant, pour chaque trajet, une première étape d'estimation des déphasages ($\xi_\ell$) des signaux reçus par les différentes antennes du réseau, une seconde étape d'estimation de l'angle d'arrivée ($\theta$) du signal ainsi que de la rotation de phase ($v$) subie par le signal le long dudit trajet à partir desdits déphasages et une troisième étape d'estimation de l'atténuation ($\alpha$) subie par le signal le long dudit trajet à partir des valeurs estimées ($v$, $\theta$) de la rotation de phase et de l'angle d'arrivée.

FIG.3

**Description**

La présente invention concerne de manière générale une méthode de détermination de la fonction de transfert spatiale d'un canal de transmission au moyen d'un réseau d'antennes. Plus précisément, lorsque la propagation du signal entre un émetteur et un réseau d'antennes de réception se fait suivant une pluralité de trajets, la présente invention permet d'estimer, pour chaque trajet, la direction d'arrivée conjointement à l'atténuation et la rotation de phase subies par le signal le long de ce trajet. La présente invention s'applique plus particulièrement à l'estimation de canal et de direction d'arrivée en téléphonie mobile.

La propagation d'un signal entre un émetteur et un récepteur, notamment entre un téléphone mobile et une station de base peut se faire selon des trajets multiples. Chaque trajet est caractérisé par un retard, une direction d'arrivée, une atténuation et une rotation de phase.

Il est connu d'utiliser un réseau d'antennes pour faire de la formation de faisceau et/ou de l'annulation d'interférence selon une ou plusieurs directions. Le traitement d'antenne consiste en une pondération des sorties des différentes antennes par des coefficients complexes avant sommation, les coefficients étant choisis de manière à obtenir le diagramme d'antenne équivalente souhaité. On peut ainsi former un faisceau dans la direction d'arrivée du signal utile tout en plaçant des zéros dans les directions d'arrivée des signaux interférents. La plupart des techniques de formation de faisceau requièrent toutefois la connaissance préalable de la direction d'arrivée du signal. La formation de faisceau a été appliquée à la téléphonie mobile, notamment pour diriger un faisceau de réception d'une station de base vers un terminal mobile (liaison montante). La station de base est alors équipée d'une antenne adaptative (dite « antenne intelligente ») capable de pointer dans la direction d'un trajet de propagation issu d'un terminal mobile.

Outre la direction d'arrivée du signal utile, il est souvent nécessaire de connaître les caractéristiques du canal de transmission. Ainsi lorsqu'un système de téléphonie mobile fonctionne selon un mode d'accès à répartition par codes (CDMA pour Code Division Multiple Access) et exploite la diversité en réception grâce à un récepteur RAKE, les coefficients complexes utilisés dans les différentes branches du récepteur sont obtenus à partir de l'atténuation et de la rotation de phase subies le long des différents trajets.

Il est connu d'utiliser une antenne adaptative exploitant la diversité de trajets. Pour ce faire, les systèmes de l'état de la technique utilisent un récepteur RAKE par antenne et effectuent la formation de faisceau à partir des signaux issus des différents récepteurs. On peut également envisager de pointer plusieurs faisceaux selon les directions d'arrivée des différents trajets et d'effectuer ensuite la combinaison des différents trajets dans un récepteur RAKE. Dans un cas comme dans l'autre on procède indépendamment à l'estimation de la direction d'arrivée du signal utile et des caractéristiques du canal de transmission. Cette approche présente le double inconvénient de nécessiter deux étapes d'estimation et de ne pas exploiter la totalité de l'information disponible à la seconde étape d'estimation.

Le but de la présente invention est de remédier aux inconvénients précités et de proposer une méthode d'estimation conjointe de la direction d'arrivée et des caractéristiques du canal de transmission. Plus particulièrement, lorsque le canal de transmission comporte plusieurs trajets de propagation, l'invention permet d'estimer la direction d'arrivée de chaque trajet et le coefficient complexe (atténuation et rotation de phase) caractérisant chaque trajet.

L'invention est définie par une méthode d'estimation de canal et de direction d'arrivée d'un signal émis par un émetteur et reçu par un réseau d'antennes après s'être propagé selon au moins un trajet, la méthode comprenant, pour chaque trajet, une première étape d'estimation des déphasages ($\xi_\ell$) des signaux reçus par les différentes antennes du réseau, une seconde étape d'estimation de l'angle d'arrivée ($\theta$) du signal ainsi que de la rotation de phase ($\nu$) subie par le signal le long dudit trajet à partir desdits déphasages et une troisième étape d'estimation de l'atténuation ($\alpha$) subie par le signal le long dudit trajet à partir des valeurs estimées ($\nu$, $\theta$) de la rotation de phase et de l'angle d'arrivée.

Avantageusement, la première étape comprend, pour chaque signal reçu ($x_\ell$), la minimisation d'une première distance entre une pluralité de valeurs dudit signal ($x_\ell(t)$) prises à une pluralité d'instants ($t$) et les valeurs prises aux mêmes instants d'un signal pilote ($b(t)$) ayant subi le déphasage et l'atténuation à estimer.

Selon une caractéristique de l'invention, la seconde étape comprend une levée d'ambiguïté des déphasages, la levée d'ambiguïté opérant de proche en proche d'une antenne à la suivante à partir d'une antenne de référence du réseau.

Avantageusement, la levée d'ambiguïté utilise une relation affine entre les déphasages et le rang de l'antenne dans le réseau.

Selon une autre caractéristique de l'invention, la rotation de phase ($\nu$) et l'angle d'arrivée ($\theta$) sont estimés à partir d'une régression linéaire sur les valeurs estimées des déphasages.

Avantageusement, la rotation de phase ($\nu$) et l'angle d'arrivée ($\theta$) sont estimés en minimisant une seconde distance

$$J(\nu, \varphi) = \sum_{\ell=1}^{L} \left( \nu + (\ell - 1).\varphi - \hat{\xi}_\ell \right)^2$$

où $\hat{\xi}_\ell$ est la valeur estimée du déphasage du signal reçu par l'antenne de rang $\ell$, $\varphi = 2\pi.\cos(\theta).d/\lambda$ où $d$ est le pas du réseau, $\lambda$ la longueur d'onde du signal et L le nombre d'antennes du réseau.

Selon une autre caractéristique de l'invention, l'on procède à une nouvelle estimation ($\tilde{\xi}_i$ $_d$) des déphasages à partir de la valeur estimée de la rotation de phase ($\hat{v}$) et de celle de l'angle d'arrivée ($\theta$).

Avantageusement, l'atténuation ($\alpha$) est estimée en minimisant une troisième distance entre une pluralité de valeurs dudit signal ($x_\ell(t)$) prises à une pluralité d'instants ($t$) et les valeurs prises aux mêmes instants d'un signal pilote ($b(t)$) déphasé des valeurs de déphasage ($\tilde{\xi}_i$ $_d$) nouvellement estimées et ayant subi l'atténuation ($\alpha$) à estimer, la distance étant calculée sur l'ensemble des antennes du réseau.

L'invention est également définie par un dispositif de réception de signal comprenant un réseau d'antennes et des moyens d'estimation adaptés à mettre en oeuvre les étapes de la méthode d'estimation exposée ci-dessus.

Selon une caractéristique de l'invention, le dispositif comprend en sortie de chaque antenne une pluralité de filtres adaptés aux différents trajets de propagation du signal et une pluralité de moyens d'estimation, chaque moyen d'estimation étant associé à un trajet (i) et recevant les sorties des filtres adaptés au trajet correspondant.

Selon une autre caractéristique de l'invention, le dispositif comprend des moyens de formation de voie, chaque moyen de formation de voie étant associé à un trajet (i) et recevant du moyen d'estimation associé audit trajet l'estimation $\theta_i$ de l'angle d'arrivée dudit trajet pour former une voie dans la direction correspondante.

En outre, chaque moyen de formation de voie peut également recevoir, des moyens d'estimation autres que le moyen d'estimation associé , les estimations ($\theta_i$, i'≠i) des angles d'arrivée des autres trajets pour placer des zéros dans les directions correspondantes.

Avantageusement, le dispositif comprend une pluralité de moyens de multiplication complexe, chaque moyen de multiplication complexe étant associé à un trajet (i) et multipliant la sortie d'un moyen de formation de voie par le coefficient complexe $\alpha_i e^{-jv_i o}$ où $v_i$ et $\alpha_i$ sont les valeurs estimées de la rotation de phase et du coefficient d'atténuation fournies par le moyen d'estimation associé audit trajet.

Les caractéristiques de l'invention mentionnées ci-dessus, ainsi que d'autres, apparaîtront plus clairement à la lecture de la description faite en relation avec les figures jointes, parmi lesquelles :

La Fig. 1 représente de manière schématique une propagation multi-trajet entre une source et un réseau d'antennes ;
La Fig. 2 représente un diagramme illustrant une procédure de levée d'ambiguïté utile à un mode de réalisation de l'invention ;
La Fig. 3 représente un dispositif de réception selon un mode de réalisation de l'invention ;

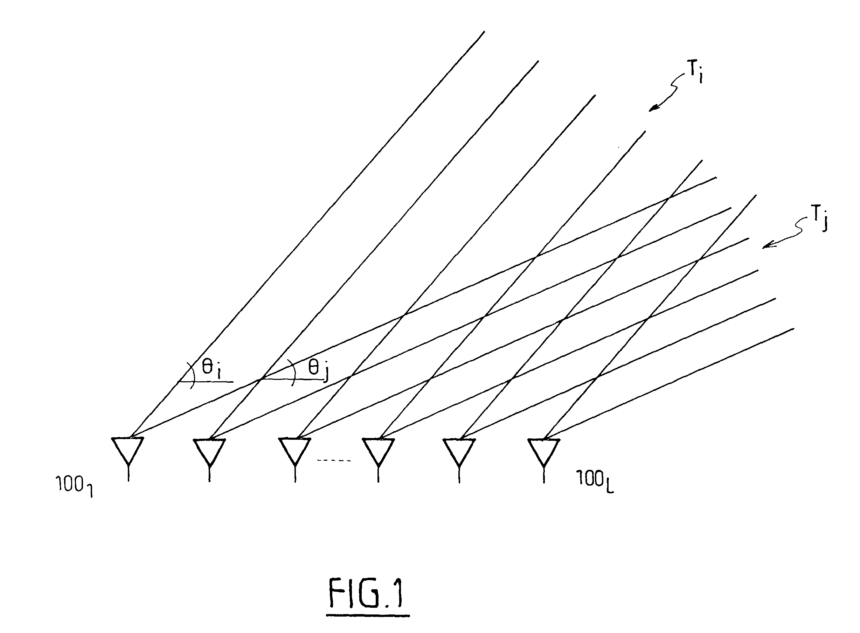

Nous nous plaçons dans l'hypothèse illustrée en Fig. 1 où un signal est émis par une source et reçu par un réseau d'antennes. Le réseau illustré est uniforme et linéaire mais, bien entendu, d'autres modes de réalisation peuvent être envisagés, notamment des réseaux sectoriels présentant des antennes élémentaires arrangées selon un arc de cercle. Le signal se propage selon une pluralité p de trajets, chaque trajet i=1..p arrivant sur le réseau selon un angle d'incidence $\theta_i$. L'ensemble des trajets constitue le canal de transmission entre la source émettrice et le réseau récepteur. Si plusieurs sources j=1..J émettent chacune un signal $S_j$, il y aura J canaux de transmission distincts, chaque canal étant constitué d'une pluralité de trajets.

Dans le contexte d'un système de télécommunication mobile, les canaux de transmission considérés correspondront à des liaisons montantes entre des terminaux mobiles, dénommés encore ci-après utilisateurs, et la station de base. Lorsque plusieurs liaisons montantes sont simultanément établies avec une même station de base, un canal de transmission donné peut être perturbé par les signaux des autres utilisateurs (interférence multi-utilisateur). En outre, le signal d'un utilisateur donné s'étant propagé selon différents trajets arrive sur le réseau après des temps de propagation différents. Les canaux de transmission étant généralement dispersifs en temps du fait de leur sélectivité en fréquence, leurs réponses impulsionnelles sont de durée non négligeable, ce qui crée des interférences entre les signaux issu du même utilisateur mais ayant suivi des trajets distincts (interférence multi-trajet). Dans certains systèmes, notamment ceux utilisant un accès CDMA par séquences directes (DS-CDMA), on arrive à isoler dans une certaine mesure chaque trajet de chaque utilisateur. Pour ce faire, on exploite les bonnes propriétés d'autocorrélation et d'intercorrélation des séquences d'étalement (spreading codes) en filtrant le signal reçu par un banc de filtres adaptés. Les interférences multi-utilisateur et multi-trajet ne sont toutefois pas complètement éliminées et une interférence résiduelle subsiste. Si les utilisateurs sont suffisamment nombreux, le théorème central limite peut être appliqué et l'interférence résiduelle vue comme un bruit blanc additif gaussien.

L'invention présuppose que le récepteur puisse, au moins grossièrement, séparer au niveau de chaque antenne les différents trajets d'un signal issu d'un utilisateur. Ce sera le cas pour un système DS-CDMA, si l'on utilise en sortie de chaque antenne une batterie de filtres adaptés à ces différents trajets. Ce sera encore le cas si le canal de transmission entre l'utilisateur et le récepteur est essentiellement constitué d'un seul trajet.

Chaque trajet i, i=1..p, est en réalité la combinaison d'un grand nombre de trajets élémentaires ayant subi des réflexions et des diffusions produites par l'environnement du récepteur et de l'émetteur. A chacun de ces trajets élémentaires sont associées une rotation de phase et une atténuation qui suivent des lois uniformes. D'après le théorème central limite, le signal $s_i(t)$ provenant du trajet i peut alors s'écrire :

$$s_i(t) = \alpha_i(t).e^{jv_i(t)}.b_i(t) + n_i(t) \qquad (1)$$

où $\alpha_i(t)$ est l'atténuation associée au trajet i obéissant à une loi de Rayleigh, $v_i(t)$ est la rotation de phase, uniformément répartie sur $]-\pi;\pi]$, $b_i(t)$ est l'information émise et $n_i(t)$ est un bruit blanc additif gaussien incluant l'interférence résiduelle. Le canal est variant dans le temps. Un des paramètres permettant de quantifier cette variation est le temps de cohérence $(\Delta t)_c$, qui garantit que deux réponses du canal à deux instants séparés de plus de $(\Delta t)_c$ sont non corrélées. Si les antennes employées dans le réseau ne sont pas omni-directionnelles, le coefficient $\alpha_i(t)$ intègre également le gain d'antenne.

Nous considérons maintenant le canal de transmission entre un utilisateur et le récepteur. Nous supposerons que le récepteur puisse isoler un trajet *i* du canal, soit que le canal ne comporte qu'un seul trajet, soit que l'on utilise un filtrage adapté au trajet i. Un seul trajet étant considéré, nous pouvons omettre l'indice i pour simplifier les notations. Nous supposerons également que le signal arrive sur un réseau linéaire uniforme de *L* antennes sous un angle d'incidence $\theta(t)$.

En notant $x_\ell$ le signal reçu au niveau de l'antenne $\ell$, $\ell =(1,..., L)$ on peut écrire:

$$x_\ell(t) = \alpha(t).e^{j\xi_\ell(t)}.\ b(t) + n_\ell(t) \qquad (2)$$

avec

$$\xi_\ell(t) = v(t) + (\ell - 1).\varphi(t) = v(t) + 2\pi\frac{d}{\lambda}(\ell - 1)\cos\big(\theta(t)\big) \qquad (3)$$

où *d* est le pas du réseau, $\lambda$ est la longueur d'onde, $b(t)$ est le symbole émis par l'utilisateur, $n_\ell(t)$ est le bruit blanc additif gaussien au niveau de l'antenne $\ell$ incluant le bruit thermique, l'interférence multi-trajet et l'interférence multi-utilisateur.

La réponse du canal est ainsi modélisée par un coefficient d'atténuation $\alpha(t)$ et une rotation de phase $v(t)$. Le déphasage total $\xi_\ell(t)$ résulte d'une part de la rotation de phase $v(t)$ induite par le canal et d'autre part de la différence de marche entre l'antenne $\ell$ et l'antenne de référence 1 sous l'angle d'arrivée $\theta(t)$.

L'invention propose une estimation conjointe de $v(t)$, $\theta(t)$, $\alpha(t)$ à partir des signaux $x_\ell(t)$ et d'une information a priori sur symbole émis $b(t)$. Le symbole $b(t)$ peut être un symbole pilote parfaitement connu du récepteur ou encore un symbole issu d'une opération de décodage antérieure à décisions souples ou dures et présentant un degré de fiabilité suffisant.

Nous supposerons $v(t)$, $\theta(t)$, $\alpha(t)$ constants sur une fenêtre d'observation de longueur T choisie faible devant le temps de cohérence $(\Delta t)_c$. La longueur T sera choisie d'autant plus courte que la vitesse du mobile est élevée et choisie d'autant plus longue que le rapport signal sur bruit est faible. Elle peut évoluer dans le temps en fonction des conditions de transmission.

On cherche $\theta$, $\alpha$ et $v$ tels que la distance quadratique D soit minimale.

$$D = \sum_{t=1}^{T}\sum_{\ell=1}^{L}\left|x_\ell(t) - \alpha.e^{j\xi_\ell}.b(t)\right|^2 \qquad (4)$$

La résolution d'un tel problème nécessite la résolution d'un système non linéaire complexe. Le problème est résolu en le scindant en trois étapes.

**Etape 1 :** on estime $\xi_\ell$ en minimisant la distance quadratique $D_\ell$ au niveau de chaque antenne :

$$D_\ell = \sum_{t=1}^{T}\left|x_\ell(t) - \alpha.e^{j\xi_\ell}.b(t)\right|^2 \qquad\qquad (5)$$

**Etape 2 :** on estime $\theta$ et $\nu$ à partir d'une régression linéaire sur les valeurs estimées $\hat{\xi}_\ell$.
**Etape 3 :** à partir des valeurs estimées $\hat{\nu}$ et $\theta$ on estime finalement $\alpha$ en minimisant la distance quadratique

$$D=\sum_{\ell=1}^{L}D_\ell .$$

Dans la première étape on cherche à estimer le déphasage du signal au niveau de chaque antenne, c'est-à-dire la valeur $\hat{\xi}_\ell$ de $\xi_\ell$ qui minimise $D_\ell$ :

$$\begin{aligned}
D_\ell &= \sum_{t=1}^{T}\left|x_\ell(t) - \alpha.e^{j\xi_\ell}.b(t)\right|^2 \\
&= \sum_{t=1}^{T}\left(x_\ell(t) - \alpha.e^{j\xi_\ell}.b(t)\right).\left(x_\ell^{*}(t) - \alpha.e^{-j\xi_\ell}.b^{*}(t)\right) \\
&= \sum_{t=1}^{T}\left(\left|x_\ell(t)\right|^2 + \alpha^2.\left|b(t)\right|^2 - 2.\mathrm{Re}\left(x_\ell(t).\alpha.e^{-j\xi_\ell}.b^{*}(t)\right)\right)
\end{aligned}$$

$$(6)$$

Si l'on prend la partie réelle dans l'équation (6), on obtient :

$$\begin{aligned}
x_\ell(t).\alpha.e^{-j\xi_\ell}.b^{*}(t) &= \alpha.\left(x_\ell^{R}(t) + j.x_\ell^{I}(t)\right).\left(b^{R}(t) - j.b^{I}(t)\right).\left(\cos(\xi_\ell) - j.\sin(\xi_\ell)\right) \\
&= \alpha.\left(\left[x_\ell^{R}(t).b^{R}(t) + x_\ell^{I}(t).b^{I}(t)\right] + j.\left[x_\ell^{I}(t).b^{R}(t) - x_\ell^{R}(t).b^{I}(t)\right]\right) \\
&\quad .\left(\cos(\xi_\ell) - j.\sin(\xi_\ell)\right)
\end{aligned}$$

$$(7)$$

donc

$$\begin{aligned}
\mathrm{Re}\left(x_\ell(t).\alpha.e^{-j\xi_\ell}b^{*}(t)\right) &= \alpha\Big(\left[x_\ell^{R}(t).b^{R}(t) + x_\ell^{I}(t).b^{I}(t)\right].\cos(\xi_\ell) \\
&\quad + \left[x_\ell^{I}(t).b^{R}(t) - x_\ell^{R}(t).b^{I}(t)\right].\sin(\xi_\ell)\Big)
\end{aligned}$$

$$(8)$$

En utilisant les équations (6) et (8) on peut calculer la dérivée de la distance $D_\ell$ selon $\xi_\ell$. On obtient:

$$\frac{\partial D_\ell}{\partial \xi_\ell} = -2.\sum_{t=1}^{T} \frac{\partial \left[ \mathrm{Re}\left( x_\ell(t).\alpha.e^{-j\xi_\ell}.b^*(t) \right) \right]}{\partial \xi_\ell}$$

$$= -2\alpha.\sum_{t=1}^{T} \left( -\left[ x_\ell^R(t).b^R(t) + x_\ell^I(t).b^I(t) \right].\sin(\xi_\ell) + \left[ x_\ell^I(t).b^R(t) - x_\ell^R(t).b^I(t) \right].\cos(\xi_\ell) \right)$$

$$(9)$$

On cherche la valeur $\hat{\xi}_\ell$ de $\xi_\ell$ qui annule la dérivée de l'équation (9). $\hat{\xi}_\ell$ doit donc vérifier l'équation suivante :

$$\sum_{t=1}^{T} \left[ x_\ell^I(t).b^R(t) - x_\ell^R(t).b^I(t) \right].\cos(\hat{\xi}_\ell) = \sum_{t=1}^{T} \left[ x_\ell^R(t).b^R(t) + x_\ell^I(t).b^I(t) \right].\sin(\hat{\xi}_\ell)$$

$$(10)$$

Pour simplifier les écritures définissons les sommes suivantes :

$$S_\ell^1 \overset{\Delta}{=} \sum_{t=1}^{T} x_\ell^I(t).b^R(t)$$

$$S_\ell^2 \overset{\Delta}{=} \sum_{t=1}^{T} x_\ell^R(t).b^I(t)$$

$$S_\ell^3 \overset{\Delta}{=} \sum_{t=1}^{T} x_\ell^R(t).b^R(t)$$

$$S_\ell^4 \overset{\Delta}{=} \sum_{t=1}^{T} x_\ell^I(t).b^I(t)$$

En remplaçant les sommes ci-dessus dans l'équation (10), on obtient la valeur estimée du déphasage $\xi_\ell$ :

$$\hat{\xi}_\ell = \mathrm{Arc\ tg}\left( \frac{S_\ell^1 - S_\ell^2}{S_\ell^3 + S_\ell^4} \right) \qquad (11)$$

Dans la seconde étape, on estime $\theta$ et $\nu$ à partir des valeurs estimées $\hat{\xi}_\ell$ des déphasages $\xi_\ell$. Le calcul des valeurs estimées $\theta$ et $\nu$ sera fait dans le cas simple d'un réseau linéaire uniforme mais peut s'étendre à un réseau quelconque.

Sur la première antenne ($\ell = 1$) prise comme antenne de référence, la rotation de phase ne dépend pas de la direction d'arrivée : $\xi_1 = \nu$. On peut donc provisoirement choisir $\nu$ égal à $\xi_1$. L'équation (10) a néanmoins deux solutions distinctes sur $]-\pi;\pi]$, qui correspondent à un maximum et un minimum de la fonction $D_\ell(\xi_\ell)$ et diffèrent d'un angle $\pi$. Ces deux valeurs estimées sont :

$$\hat{\xi}_1^0 \in \left[ -\frac{\pi}{2};\frac{\pi}{2} \right] \quad \text{et} \quad \hat{\xi}_1^1 = \hat{\xi}_1^0 + \pi \qquad (12)$$

Le minimum correspond à la valeur pour laquelle la dérivée seconde $\dfrac{\partial^2 D_\ell}{\partial \xi_\ell^{\,2}}$ avec $\ell = 1$ est positive.

$$\frac{\partial^2 D_\ell}{\partial \xi_\ell^{\,2}} = 2\alpha.\left[\left(S_\ell^3 + S_\ell^4\right).\cos(\xi_\ell) + \left(S_\ell^1 - S_\ell^2\right).\sin(\xi_\ell)\right] \qquad (13)$$

$\hat{\xi}_1$ est celle des deux valeurs fournies par l'équation (10) qui correspond à une valeur positive de la formule (13) pour $\ell=1$. Considérons maintenant les autres antennes ($\ell > 1$). La valeur de $\xi_\ell$ est liée à $\theta$ et $\nu$ par les égalités suivantes :

$$\xi_\ell = \nu + \varphi_\ell = \nu + (\ell\text{-}1).\varphi = \nu + 2\pi \frac{d}{\lambda}(\ell\text{-}1)\cos\theta \qquad (14)$$

L'équation (10) a plusieurs solutions. Soit $\hat{\xi}_\ell^0$ l'unique solution telle que

$$\hat{\xi}_\ell^0 \in \left[ -\frac{\pi}{2}; \frac{\pi}{2} \right].$$

Les autres solutions sont $\hat{\xi}_\ell^k = \hat{\xi}_\ell^0 + k.\pi$ avec $k$ entier relatif. D'après la relation (14) on doit toujours avoir

$$\hat{\xi}_\ell^k \in \left] -2\pi\frac{d}{\lambda}(\ell-1) + \nu \; ; \; 2\pi\frac{d}{\lambda}(\ell-1) + \nu \right] \qquad (15)$$

On doit donc rechercher toutes les solutions possibles qui vérifient les conditions (14) et (15), en remplaçant $\nu$ par sa valeur estimée déjà disponible $\xi_1$. Si $d/\lambda = 1/2$, la longueur du segment de l'équation (15) est $2(\ell\text{-}1)\pi$. Il existe donc au plus $2(\ell\text{-}1)$ valeurs possibles de $\xi_\ell^k$ pour $d/\lambda \leq 1/2$. Il faut ensuite vérifier, pour chacune de ces solutions, si elle est bien un minimum et donc si la dérivée seconde fournie par la formule (13) est bien positive pour la valeur $\xi_\ell = \xi_\ell^k$. Grâce aux propriétés de périodicité des fonctions cosinus et sinus, on peut montrer que si $\xi_\ell^0$ est un minimum, tous les $\xi_\ell^k$ avec $k$ pair sont des minima et tous les $\xi_\ell^k$ avec $k$ impair des maxima. De même, si $\xi_\ell^0$ est un maximum, tous les $\xi_\ell^k$ avec $k$ pair sont des maxima et tous les $\xi_\ell^k$ avec $k$ impair des minima. On en déduit donc que parmi les $2(\ell\text{-}1)$ valeurs possibles de $\xi_\ell^k$, seules $(\ell - 1)$ valeurs sont des minima.

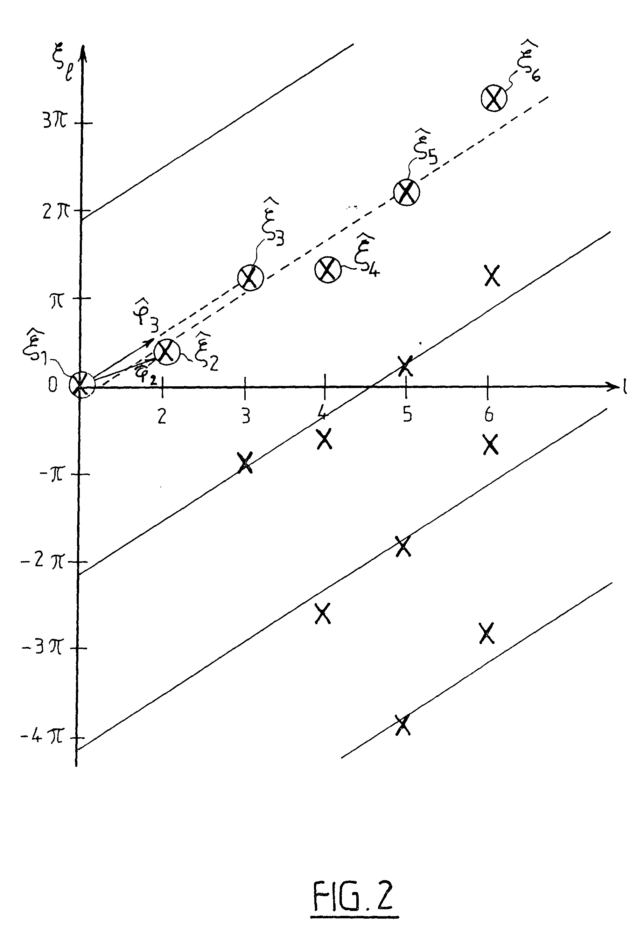

Il reste donc à choisir un minimum parmi les différents minima obtenus. La procédure de levée d'ambiguïté est illustrée en Fig. 2. Pour $\ell=2$ et $d/\lambda \leq 1/2$, ce qui est toujours le cas en pratique, $\xi_2^k \in ]-\pi + \nu; \pi + \nu]$ et il n'existe donc qu'un seul minimum $\xi_2$. Ce minimum permet de faire une première estimation $\varphi^{(2)}$ de $\varphi$: $\varphi^{(2)} = \xi_2 - \xi_1$. L'ambiguïté sur les valeurs estimées $\xi_\ell$ croît linéairement avec le rang $\ell$ de l'antenne. Cependant, la relation affine entre $\xi_\ell$ et $\varphi$ ainsi qu'une condition de continuité de $\varphi$ d'une antenne à la suivante permettent de lever cette ambiguïté . Plus précisément, pour $\ell > 2$, on choisit parmi tous les minima possibles celui qui conduit à la plus faible variation de l'estimation de $\varphi$ de l'antenne $\ell\text{-}1$ à l'antenne $\ell$, soit :

$$\hat{\xi}_\ell = \hat{\xi}_\ell^{\hat{k}} \quad \text{avec} \quad \hat{k} = \underset{k \text{ tel que } \hat{\xi}_\ell^k \text{ est un minimum}}{\arg\min} \left( \left| \hat{\varphi}^{(k,\ell)} - \hat{\varphi}^{(\ell-1)} \right| \right) \qquad (16)$$

où

$$\hat{\varphi}^{(k,\ell)} = \frac{\hat{\xi}_\ell^k - \hat{\nu}}{\ell - 1}$$

et

$$\hat{\varphi}^{(\ell)} = \frac{\hat{\xi}_\ell - \hat{v}}{\ell - 1}$$

où le choix de $\hat{\xi}_\ell$ exprimé par l'équation (16) traduit la continuité de $\varphi$ d'une antenne à la suivante. On lève ainsi l'ambiguïté de proche en proche, d'une antenne à la suivante en partant de l'antenne de référence $\ell=1$.

On dispose ainsi d'un ensemble de $L$ valeurs estimées $\hat{\xi}_\ell$ pour $\ell = \{1,...,L\}$ à partir desquelles les valeurs estimées $v$ et $\varphi$ sont ensuite obtenues par régression linéaire. Plus précisément on cherche les valeurs $v$ et $\varphi$ qui minimisent l'écart quadratique J :

$$J(v,\varphi) = \sum_{\ell=1}^{L}\left(v + (\ell-1).\varphi - \hat{\xi}_\ell\right)^2 \qquad (17)$$

Ces deux valeurs sont obtenues par annulation des dérivées partielles de la fonction $J$ :

$$\frac{\partial J}{\partial v}(\hat{v},\hat{\varphi}) = 2.\sum_{\ell=1}^{L}\left(\hat{v} + (\ell-1).\hat{\varphi} - \hat{\xi}_\ell\right) = 0 \quad \Leftrightarrow \quad \hat{v} = \overline{\xi} - \hat{\varphi}.\overline{\ell-1} \qquad (18)$$

avec

$$\overline{\xi} = \frac{1}{L}\sum_{\ell=1}^{L}\hat{\xi}_\ell \ \text{ et } \ \overline{\ell-1} = \frac{1}{L}\sum_{\ell=1}^{L}(\ell-1)$$

$$\frac{\partial J}{\partial \varphi}(\hat{v},\hat{\varphi}) = 2.\sum_{\ell=1}^{L}(\ell-1).\left(\hat{v} + (\ell-1).\hat{\varphi} - \hat{\xi}_\ell\right) = 0 \quad \Leftrightarrow \quad \overline{(\ell-1)^2}.\hat{\varphi} = \overline{(\ell-1).\xi} - \hat{v}.\overline{\ell-1}$$

$$(19)$$

avec

$$\overline{(\ell-1).\xi} = \frac{1}{L}\sum_{\ell=1}^{L}(\ell-1).\hat{\xi}_\ell \ \text{ et } \ \overline{(\ell-1)^2} = \frac{1}{L}\sum_{\ell=1}^{L}(\ell-1)^2$$

En remplaçant l'équation (18) dans l'équation (19), on obtient :

$$\overline{(\ell-1)^2}.\hat{\varphi} = \overline{(\ell-1).\xi} - (\overline{\xi} - \hat{\varphi}.\overline{\ell-1}).\overline{\ell-1} \Leftrightarrow \hat{\varphi} = \frac{\overline{(\ell-1).\xi} - \overline{\xi}.\overline{\ell-1}}{\overline{(\ell-1)^2} - \overline{\ell-1}^2} \qquad (20)$$

Grâce à l'équation (18), on peut alors calculer $\hat{v}$. A partir de la valeur de $\hat{\varphi}$, on peut également déduire $\hat{\theta}$ :

$$\hat{\theta} = \arccos\left(\frac{\hat{\varphi}}{2\pi d / \lambda}\right) \in [0;\pi] \qquad (21)$$

On dispose à la fin de la seconde étape des valeurs estimées $\hat{v}$ et $\hat{\theta}$. Dans la troisième étape on cherche à évaluer le coefficient d'atténuation $\alpha$. Pour ce faire, on procède d'abord à une nouvelle estimation $\tilde{\xi}_\ell$ des déphasages au niveau de chaque antenne $\ell$ à partir de $v$ et $\varphi$ soit:

$$\widetilde{\xi}_\ell = \hat{v} + (\ell - 1).\hat{\varphi} \qquad (22)$$

Enfin, la valeur estimée $\hat{\alpha}$ de l'atténuation $\alpha$ du canal est celle qui minimise $D$ sachant que $\xi_\ell = \widetilde{\xi}_\ell$, $\forall \ell$. D'après l'équation (4), la valeur $\hat{\alpha}$, qui annule la dérivée $\frac{\partial D}{\partial \alpha}$, vérifie :

$$\frac{\partial D}{\partial \alpha}(\hat{\alpha}) = 2.\sum_{\ell=1}^{L}\sum_{t=1}^{T}\left[\hat{\alpha}.|b(t)|^2 - \mathrm{Re}\left(x_\ell(t).e^{-j\widetilde{\xi}_\ell}.b^*(t)\right)\right] = 0 \Leftrightarrow \hat{\alpha} = \frac{\displaystyle\sum_{\ell=1}^{L}\sum_{t=1}^{T}\mathrm{Re}\left(x_\ell(t).e^{-j\widetilde{\xi}_\ell}.b^*(t)\right)}{L\displaystyle\sum_{t=1}^{T}|b(t)|^2}$$

$$(23)$$

L'estimation de $\theta$, $v$ et $\alpha$ peut se faire de manière dynamique en utilisant une fenêtre d'analyse glissante. La poursuite de l'angle d'arrivée permet alors au formateur de faisceau de suivre continûment le mobile. De même, la poursuite des paramètres $v$ et $\alpha$ permet d'assurer une combinaison adaptative des différentes branches dans un récepteur RAKE.

Nous avons considéré jusqu'à présent un seul trajet du canal de transmission. Si le canal présente plusieurs trajets i=1..p, la méthode d'estimation conjointe doit être appliquée à chaque trajet i. Le canal peut alors être caractérisé par un ensemble de triplets de valeurs estimées ($\hat{\theta}_i$, $\hat{v}_i$, $\hat{\alpha}_i$), i=1..p, chaque triplet caractérisant lui-même un trajet.

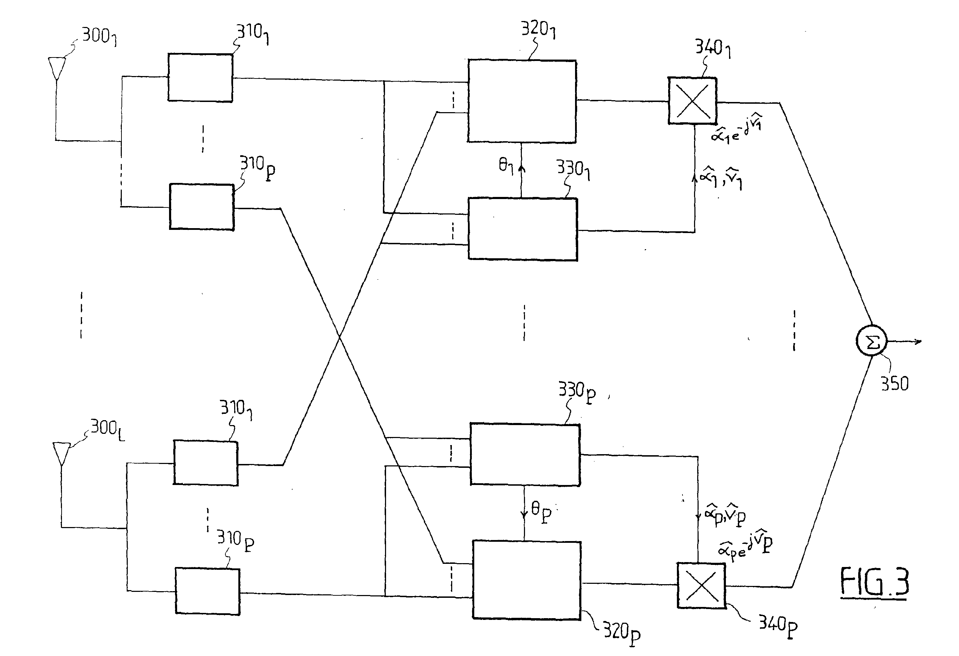

La Fig. 3 illustre un dispositif de réception selon un mode de réalisation de l'invention. Le dispositif comprend un réseau d'antennes ($300_1$) ...($300_L$). Chaque antenne ($300\ell$) est reliée à une batterie de filtres adaptés ($310_i$), i=1..p, chaque filtre ($310_i$) étant adapté à un trajet i. Les sorties des différents filtres ($310_i$) relatifs à un même trajet i sont reliées à un module d'estimation conjointe ($330_i$) mettant en oeuvre la méthode d'estimation décrite ci-dessus et fournissant un triplet de valeurs estimées ($\hat{\theta}_i$, $\hat{v}_i$, $\hat{\alpha}_i$). L'estimation est effectuée en parallèle pour tous les trajets. Les signaux de sortie relatifs à un même trajet i=1..P sont également dirigés vers des moyens de formation de voies ($320_1$,...,$320_P$). La valeur estimée $\hat{\theta}_i$ fournie par le module d'estimation conjointe au formateur de voie ($320_i$) permet à ce dernier de pointer son faisceau de réception dans la direction d'arrivée du trajet i. Dans une variante de réalisation non représentée, chaque formateur de voie ($320_i$) reçoit également les valeurs estimées $\hat{\theta}_{i'}$ fournies par les autres estimateurs ($330_{i'}$), i'≠i, des trajets i' du même utilisateur. Ceci permet au formateur de voie ($320_i$) de placer des zéros dans le diagramme de réception pour les directions concernées ($\hat{\theta}_{i'}$, i'≠i) de manière à mieux séparer les signaux reçus des différents trajets. Les valeurs estimées $\hat{v}_i$ et $\hat{\alpha}_i$ sont transmises à un multiplicateur complexe ($340_i$) qui multiplie le signal de sortie du formateur de voie ($320_i$) par le coefficient complexe $\hat{\alpha}_i e^{-j\hat{v}_i}$, conjugué du coefficient complexe du canal. Les sorties des P multiplicateurs sont alors sommées dans un sommateur (350) pour fournir une sortie de type MRC (Maximum Ratio Combining).

Ce dispositif de réception permet de réaliser à la fois une formation de voies dans les directions des différents trajets et une combinaison de type MRC comme dans un filtre de Rake. Il est clair pour l'homme du métier que les opérations représentées par les différents modules de la Fig. 3 peuvent être effectuées par un processeur programmé à cet effet ou par une pluralité de processeur dédiés.

Bien que l'invention ait été essentiellement décrite dans le cadre de la réception d'un signal émis par un terminal mobile et reçu par l'antenne adaptative d'une station de base, il est clair pour l'homme du métier que l'invention ne se limite pas à cet exemple d'application mais s'étend à tout type d'application requérant l'estimation de direction d'arrivée d'un signal utile et des caractéristiques d'un canal de transmission.

**Revendications**

1. Méthode d'estimation de canal et de direction d'arrivée d'un signal émis par un émetteur et reçu par un réseau d'antennes après s'être propagé selon au moins un trajet, **caractérisée en ce qu'**elle comprend, pour chaque trajet, une première étape d'estimation des déphasages ($\xi_\ell$) des signaux reçus par les différentes antennes du réseau, une seconde étape d'estimation de l'angle d'arrivée ($\theta$) du signal ainsi que de la rotation de phase ($v$) subie par le signal le long dudit trajet à partir desdits déphasages et une troisième étape d'estimation de l'atténuation ($\alpha$) subie par le signal le long dudit trajet à partir des valeurs estimées ($\hat{v}$, $\hat{\theta}$) de la rotation de phase et de l'angle d'arrivée.

2. Méthode d'estimation selon la revendication 1, **caractérisée en ce que** la première étape comprend, pour chaque

signal reçu ($x_\ell$), la minimisation d'une première distance entre une pluralité de valeurs dudit signal ($x_\ell(t)$) prises à une pluralité d'instants ($t$) et les valeurs prises aux mêmes instants d'un signal pilote ($b(t)$) ayant subi le déphasage et l'atténuation à estimer.

3. Méthode d'estimation selon la revendication 2, **caractérisée en ce que** le déphasage $\xi_\ell$ du signal $x_\ell$ reçu par une antenne $\ell$ est estimé par :

$$\hat{\xi}_\ell = \text{Arc tg}\left(\frac{S_\ell^1 - S_\ell^2}{S_\ell^3 + S_\ell^4}\right)$$

où

$$S_\ell^1 \overset{\Delta}{=} \sum_{t=1}^{T} x_\ell^I(t).b_R(t)$$

$$S_\ell^2 \overset{\Delta}{=} \sum_{t=1}^{T} x_\ell^R(t).b_I(t)$$

$$S_\ell^3 \overset{\Delta}{=} \sum_{t=1}^{T} x_\ell^R(t).b_R(t)$$

$$S_\ell^4 \overset{\Delta}{=} \sum_{t=1}^{T} x_\ell^I(t).b_I(t)$$

où $x_\ell^R(t)$ et $x_\ell^I(t)$ sont respectivement la partie réelle et la partie imaginaire de la valeur du signal reçu $x_\ell$ à l'instant t, $b_R(t)$ et $b_I(t)$ la partie réelle et la partie imaginaire de la valeur du signal pilote à l'instant $t$ et T une longueur de fenêtre temporelle.

4. Méthode d'estimation selon l'une des revendications précédentes, **caractérisée en ce que** la seconde étape comprend une levée d'ambiguïté des déphasages, la levée d'ambiguïté opérant de proche en proche d'une antenne à la suivante à partir d'une antenne de référence du réseau.

5. Méthode d'estimation selon la revendication 4, **caractérisée en ce que** la levée d'ambiguïté utilise une relation affine entre les déphasages et le rang de l'antenne dans le réseau.

6. Méthode d'estimation selon l'une des revendications précédentes, **caractérisée en ce que** la rotation de phase ($\nu$) et l'angle d'arrivée ($\theta$) sont estimés à partir d'une régression linéaire sur les valeurs estimées des déphasages.

7. Méthode d'estimation selon la revendication 6, **caractérisée en ce que** la rotation de phase ($\nu$) et l'angle d'arrivée ($\theta$) sont estimés en minimisant une seconde distance

$$J(\nu,\varphi) = \sum_{\ell=1}^{L} \left(\nu + (\ell-1).\varphi - \hat{\xi}_\ell\right)^2$$

où $\hat{\xi}_\ell$ est la valeur estimée du déphasage du signal reçu par l'antenne de rang $\ell$, $\varphi = 2\pi.\cos(\theta).d/\lambda$ où $d$ est le pas du réseau, $\lambda$ la longueur d'onde du signal et L le nombre d'antennes du réseau.

8. Méthode d'estimation selon l'une des revendications précédentes, **caractérisée en ce que** l'on procède à une

nouvelle estimation ($\tilde{\xi}_{i,\ell}$) des déphasages à partir de la valeur estimée de la rotation de phase ($\hat{v}$) et de celle de l'angle d'arrivée ($\theta$).

**9.** Méthode d'estimation selon la revendication 8, **caractérisée en ce que** l'atténuation ($\alpha$) est estimée en minimisant une troisième distance entre une pluralité de valeurs dudit signal ($x_\ell(t)$) prises à une pluralité d'instants ($t$) et les valeurs prises aux mêmes instants d'un signal pilote ($b(t)$) déphasé des valeurs de déphasage ($\tilde{\xi}_{i,\ell}$) nouvellement estimées et ayant subi l'atténuation ($\alpha$) à estimer, la distance étant calculée sur l'ensemble des antennes du réseau.

**10.** Dispositif de réception de signal comprenant un réseau d'antennes ($300_i$) et des moyens d'estimation ($330_i$) adaptés à mettre en oeuvre les étapes de la méthode selon l'une des revendications précédentes.

**11.** Dispositif de réception selon la revendication 10, **caractérisé en ce qu'**il comprend en sortie de chaque antenne une pluralité de filtres adaptés ($310_i$) aux différents trajets de propagation du signal et une pluralité de moyens d'estimation ($330_i$), chaque moyen d'estimation étant associé à un trajet (i) et recevant les sorties des filtres adaptés ($310_i$) au trajet correspondant.

**12.** Dispositif de réception selon la revendication 11, **caractérisé en ce qu'**il comprend des moyens de formation de voie ($320_i$), chaque moyen de formation de voie ($320_i$) étant associé à un trajet (i) et recevant du moyen d'estimation ($330_i$) associé audit trajet l'estimation $\theta_i$ de l'angle d'arrivée dudit trajet pour former une voie dans la direction correspondante.

**13.** Dispositif de réception selon la revendication 12, **caractérisé en ce que** chaque moyen de formation de voie ($320_i$) reçoit également des moyens d'estimation ($330_{i'}$) autres que le moyen d'estimation associé ($330_i$) les estimations ($\theta_{i'}$, $i'\neq i$) des angles d'arrivée des autres trajets pour placer des zéros dans les directions correspondantes.

**14.** Dispositif de réception selon la revendication 12 ou 13, **caractérisé en ce qu'**il comprend en outre une pluralité de moyens de multiplication complexe ($340_i$), chaque moyen de multiplication complexe étant associé à un trajet (i) et multipliant la sortie d'un moyen de formation de voie ($320_i$) par le coefficient complexe $\hat{\alpha}_i e^{-j\hat{v}_i t}$ où $v_i$ et $\alpha_i$ sont les valeurs estimées de la rotation de phase et du coefficient d'atténuation fournies par le moyen d'estimation associé audit trajet.

EP 1 185 004 A1

$T_i$

$T_j$

$\theta_i$

$\theta_j$

$100_1$

$100_L$

FIG.1

FIG.2

EP 1 185 004 A1

FIG.3

14

EP 1 185 004 A1

**Office européen des brevets**

## RAPPORT DE RECHERCHE EUROPEENNE

Numéro de la demande

EP 01 40 2234

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | VANDERVEEN M C ET AL: "JOINT ANGLE AND DELAY ESTIMATION (JADE) FOR MULTIPATH SIGNALS ARRIVING AT AN ANTENNA ARRAY" IEEE COMMUNICATIONS LETTERS,US,IEEE SERVICE CENTER, PISCATAWAY,US, vol. 1, no. 1, 1997, pages 12-14, XP000643014 ISSN: 1089-7798 | 1,2, 10-12,14 | H04B7/08 |
| Y | * le document en entier * | 4,5 | |
| Y | CHING-SUNG SHIEH; CHIN-TENG LIN: "Direction of arrival estimation based on phase differences using neural fuzzy network" IEEE TRANSACTIONS ON ANTENNAS AND PROPAGATION, vol. 48, no. 7, 1 juillet 2000 (2000-07-01), pages 1115-1124, XP002167981 * page 1116, colonne 2, dernier alinéa - page 1118, colonne 1, alinéa 3 * * page 1117; figure 2 * | 4,5 | |
| A | EP 0 926 510 A (THOMSON CSF) 30 juin 1999 (1999-06-30) * page 2, alinéa 6 * * revendications 1,7 * * figures 1,2 * | 1,10 | DOMAINES TECHNIQUES RECHERCHES (Int.Cl.7) H04B H04Q |

Le présent rapport a été établi pour toutes les revendications

| Lieu de la recherche | Date d'achèvement de la recherche | Examinateur |
|---|---|---|
| LA HAYE | 10 décembre 2001 | Yang, Y |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 01 40 2234

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

10-12-2001

| Document brevet cité au rapport de recherche | Date de publication | Membre(s) de la famille de brevet(s) | Date de publication |
|---|---|---|---|
| EP 0926510        A | 30-06-1999 | FR    2773039 A1<br>EP    0926510 A1 | 25-06-1999<br>30-06-1999 |

EPO FORM P0460

Pour tout renseignement concernant cette annexe : voir Journal Officiel de l'Office européen des brevets, No.12/82